# EUROPÄISCHE PATENTANMELDUNG

(11) **EP 2 937 395 A1**
(43) Veröffentlichungstag der Anmeldung: **28.10.2015**
(21) Anmeldenummer: 14165679.3
(22) Anmeldetag: 23.04.2014
(51) Int. Cl.: C09J 133/06, D06Q 1/06

(54) **Zusammensetzung zum Beschichten einer Flock-Transferfolie, Verfahren zum Beschichten einer Flock-Transferfolie, Flock-Transferfolie, Verwendung einer Flock-Transferfolie und Vorrichtung zur Durchführung des Verfahrens**

(71) Anmelder: Vespo Transfer Specials GmbH, 65760 Eschborn (DE)
(72) Erfinder: Vetter, Joachim, 64823 Groß-Umstadt (DE)
(74) Vertreter: Patentanwälte Olbricht Buchhold Keulertz

(57) **Zusammenfassung**

Die Erfindung betrifft eine Zusammensetzung zum Beschichten einer Flock-Transferfolie, welche für die Produktion bedruckter vollwaschbarer Flock-Transfer-Motive geeignet ist. Des Weiteren wird ein Verfahren zum Beschichten einer Flock-Transferfolie zur Verfügung gestellt. Die erfindungsgemäße Flock-Transferfolie zeichnet sich insbesondere dadurch aus, dass sie ressourcenschonend und damit kosteneffizient bedruckbar sowie schneidbar und hei ßsiegelfähig ist, wobei das Bedrucken insbesondere mit einem Tintenstrahldrucker oder Hybridplotter erfolgt. Es werden bei Verwendung einer erfindungsgemäßen Flock-Transferfolie Druckergebnisse mit hoher Farbtiefe und -echtheit, hoher Konturenschärfe und guten Farbausbeuten erzielt. Vollwaschbare und damit dauerhaft farbechte Flock-Transfer-Motive lassen sich unter Verwendung der erfindungsgemäßen Zusammensetzung bzw. der damit beschichteten Flock-Transferfolien einfach und kostengünstig herstellen und für die Produktion hochwertiger Textilprodukte verwenden.

## Beschreibung

Die Erfindung betrifft eine Zusammensetzung zum Beschichten einer Flock-Transferfolie gemäß dem Oberbegriff von Anspruch 1. Ferner betrifft die Erfindung ein Verfahren zum Beschichten einer Flock-Transferfolie gemäß Anspruch 10 sowie eine nach dem erfindungsgemäßen Verfahren erhältliche Flock-Transferfolie, eine Flock-Transferfolie gemäß Anspruch 16 bzw. 18, die Verwendung einer erfindungsgemäßen Flock-Transferfolie nach Anspruch 28 bzw. 29 sowie eine Vorrichtung zur Durchführung des Verfahrens..

Mit Transferfolien können beispielsweise textilen Materialien zusätzliche, neue Eigenschaften verliehen werden, z. B. durch das Aufbringen von Motiven auf T-Shirts, Taschen oder Fahnen. Dazu wird häufig von einer Beflockung Gebrauch gemacht, wobei Flock, d. h. feine Textilfasern, auf die Oberfläche eines Textils aufgebracht wird. Dadurch wird nicht nur die Optik, sondern auch die Haptik des Textils verändert, zumal durch den Flock eine samtartige Oberfläche erhalten wird.

Aus EP 0 189 876 A2 ist ein mehrschichtiger Flocktransferfolien-Zuschnitt bekannt, welcher eine Flockschicht aufweist. Dabei ist die Flockschicht an ihrer Aufbringungsseite mit einer stark haftenden Thermokleberschicht beschichtet. Auf ihrer Sichtseite ist die Flockschicht über eine schwach haftende Haftschicht lösbar an einer versteifenden Trägerbahn angebracht. Mit diesem Flocktransferfolien-Zuschnitt sind mehrfarbige, aus mehreren Teilflächen zusammengesetzte Figuren realisierbar, wobei die weiche, flauschige Konsistenz erhalten bleibt.

Häufig ist die Qualität von Transfer-Flocktransferfolien nicht zufriedenstellend, insbesondere hinsichtlich der Konturenschärfe und Waschechtheit. Die auf ein Textil aufgebrachten Flock-Motive zeigen oft geringe Farbintensitäten und schlechte Farb- und Waschbeständigkeiten.

Der Erfindung liegt daher die Aufgabe zugrunde, diese und weitere Nachteile des Standes der Technik zu überwinden und eine Zusammensetzung zum Beschichten einer Flock-Transferfolie zur Verfügung zu stellen, durch die eine einfache und kostengünstige Herstellung (mehr)farbiger, farbintensiver, vollwaschbarer und konturenscharfer Flock-Transfer-Motive ermöglicht wird. Ferner soll ein Verfahren zum Beschichten einer Flock-Transferfolie zur Verfügung gestellt werden sowie eine Flock-Transferfolie, die farbecht bedruckbar, schneidbar und gegebenenfalls heißsiegelfähig ist. Dabei soll die Flock-Transferfolie für die Herstellung qualitativ hochwertiger Textilprodukte verwendbar sein.

Hauptmerkmale der Erfindung sind im kennzeichnenden Teil der Ansprüche 1, 10, 15, 16, 18, 28 bzw. 29 angegeben. Ausgestaltungen sind Gegenstand der Ansprüche 2 bis 9, 11 bis 14, 17 bzw. 19 bis 27.

Gelöst wird die Aufgabe durch eine Zusammensetzung zum Beschichten einer Flock-Transferfolie aufweisend
- 10 bis 30 Gew.-% eines Dispersionsklebers, welcher wenigstens ein Polymer eines Acrylderivates
   enthält,
- 0,1 bis 12 Gew.-% eines Verdickers, welcher wenigstens ein Polymer eines Acrylderivates enthält, und
- 0,5 bis 14 Gew.-% eines Fixieradditivs, welches wenigstens ein Aminoplast enthält.

Die erfindungsgemäße Zusammensetzung kann in Form einer Paste, einer Dispersion oder einer Lösung vorliegen. Durch das Vorhandensein einer Beschichtung der erfindungsgemäßen Zusammensetzung auf der Flockschicht einer Flock-Transferfolie wird das Penetrierverhalten von Tinten während des Bedruckens verbessert. Zudem erfolgt eine bessere Vernetzung der Tinten bzw. der darin enthaltenen Farbstoffmoleküle oder Pigmente mit den Textilfasern der Flockschicht. Hinzu kommt, dass die Oxidation der Farbstoffe bzw. der Pigmente durch das Vorhandensein der erfindungsgemäßen Zusammensetzung gefördert und eine Zerstörung der Farbstoffe bzw. der Pigmente durch reduktive Einflüsse verhindert wird. Darüber hinaus dient die erfindungsgemäße Zusammensetzung als Fixierhilfe. Insgesamt wird beim Bedrucken einer mit der erfindungsgemäßen Zusammensetzung beschichteten Transfer-Flockfolie eine hohe Konturenschärfe, eine hohe Farbtiefe sowie eine hohe Farbechtheit bzw. Waschbarkeit gewährleistet. Außerdem wird der Tintenverbrauch reduziert, weil eine effizientere Vernetzung zwischen den farbgebenden Bestandteilen der Tinten und den Textilfasern der Flockschicht erzielt wird. Ein Ausfließen oder Verlaufen der aufgespritzten Tinten wird effektiv verhindert. Während des Aufbringens und Fixierens eines aus einer Flock-Transferfolie ausgeschnittenen Flock-Transfer-Motives auf ein Textil, wobei Druck und Hitze angewandt werden, fungiert eine auf der Flockschicht vorhandene Beschichtung, enthaltend die erfindungsgemäße Zusammensetzung, als eine Art Schutzschicht. Daher sind auch nach dem Aufbringen und Fixieren des Flock-Transfer-Motives sowohl das Druckergebnis, d. h. die Farbintensität und Konturenschärfe, als auch die samtartige Haptik der Flockschicht unverändert.

In einer bevorzugten Ausführungsform der erfindungsgemäßen Zusammensetzung ist vorgesehen, dass das Polymer des Dispersionsklebers ein Acrylharz ist. Dies ist vorteilhaft, weil Acrylharze thermoplastisch und wärmehärtbar sind. Über die Wahl der Monomeren lassen sich Löslichkeits- und Filmeigenschaften, z. B. die Härte, nach Bedarf variieren.

Ein weiteres vorteilhaftes Ausführungsbeispiel sieht vor, dass das Polymer des Verdickers ein Polyacrylamid ist, insbesondere ein chemisch modifiziertes Polyacrylamid. Polyacrylamide besitzen unter anderem die Eigenschaft, dass sie beim Erhitzen unlösliche Netzwerke bilden. Somit können die rheologischen Eigenschaften der erfindungsgemäßen Zusammensetzung durch die Wahl des Polyacrylamids und/oder durch Variation des Gewichtsprozentanteils des Verdickers gezielt beeinflusst werden können.

In einer bevorzugten Ausgestaltung der erfindungsgemäßen Zusammensetzung ist vorgesehen, dass das Aminoplast des Fixieradditivs ein Melaminharzderivat ist. Besonders geeignet sind Formaldehyd-Melamin-Harze, wobei diese auch chemisch modifiziert sein können. Beispiele für chemisch modifizierte Formaldehyd-Melamin-Harze sind Melamin-Phenol-Formaldehyd-Harze und Melamin-Harnstoff-Formaldehyd-Harze.

Vorzugsweise enthält die Zusammensetzung ein organisches Lösungsmittel und/oder Wasser. Dadurch können die Viskosität und damit die Fließeigenschaften der erfindungsgemäßen Zusammensetzung anwendungsspezifisch eingestellt werden. Besonders bevorzugt ist das organische Lösungsmittel ausgewählt aus der Gruppe der aliphatischen und alicyclischen Kohlenwasserstoffe mit 1 bis 20 Kohlenstoffatomen, bevorzugt mit 9 bis 16 Kohlenstoffatomen. Je nach Wahl des Lösungsmittels oder Lösungsmittelgemisches - aus mehreren organischen Lösungsmitteln und/oder Wasser - und je nach Lösungsmittelvolumen liegt die erfindungsgemäße Zusammensetzung als eine Paste, eine Dispersion oder eine Lösung vor.

Die Aufgabe wird außerdem gelöst durch ein Verfahren zum Beschichten einer Flock-Transferfolie umfassend die Schritte:
a) Vorsehen einer Rolle, auf welcher die zu beschichtende Flock-Transferfolie aufgewickelt ist, in einer Abwickelvorrichtung,
b) Gegebenenfalls Fixieren der Rolle,
c) Betätigen der Abwickelvorrichtung,
d) Einbringen der abgewickelten Flock-Transferfolie in eine Beschichtungsvorrichtung, welche eine Streichunterlage, ein Rakelmesser und einen Vorratsbehälter aufweist, wobei der Vorratsbehälter eine Zusammensetzung nach einem der vorhergehenden Ausführungsbeispiele enthält,
e) Transportieren der Flock-Transferfolie durch die Beschichtungsvorrichtung, wobei die Flock-Transferfolie das Rakelmesser passiert und dabei mit der Zusammensetzung beschichtet wird und
f) Trocknen der beschichteten Flock-Transferfolie.

Dabei haben die gemäß Schritt a) vorgesehene Rollen üblicherweise eine Rohbreite, d. h. ein Endmaß nach dem Zuschnitt, von 52,0 cm und eine Länge von 360 m. Mit "Vorsehen einer Rolle" ist z.B. gemeint, dass die Rolle in eine Abwickelvorrichtung eingehängt wird. Die Fixierung gemäß Schritt b) erfolgt beispielsweise mittels einer pneumatischen Spannwalze. Nach dem "Einfädeln" der zu beschichtenden Flock-Transferfolie in die Abwickelvorrichtung kann deren Spannung durch eine pneumatische Scheibenbremse reguliert werden.

Durch das Betätigen der Abwickelvorrichtung (Schritt c) wird die zu beschichtende Flock-Transferfolie nach und nach von der Rolle abgewickelt und in eine Beschichtungsvorrichtung eingebracht (Schritt d). Die Beschichtungsvorrichtung weist insbesondere eine Streichunterlage, ein Rakelmesser und einen Vorratsbehälter auf, wobei der Vorratsbehälter eine Zusammensetzung nach einem der vorhergehenden Ausführungsbeispiele enthält. Um sicherzustellen, dass der Vorratsbehälter stets ein ausreichendes Volumen der erfindungsgemäßen Zusammensetzung enthält, kann der Vorratsbehälter einen Sensor für die Niveau-Überwachung aufweisen. Besonders geeignet sind Ultraschallsensoren. Das Befüllen des Vorratsbehälters bzw. das Nachfüllen der erfindungsgemäßen Zusammensetzung erfolgt z.B. mittels einer Peristaltik-Schlauchpumpe.

Das Beschichten der Flock-Transferfolie mit der erfindungsgemäßen Zusammensetzung erfolgt gemäß Schritt e) dadurch, dass die Flock-Transferfolie durch die Beschichtungsvorrichtung hindurchgeführt bzw. -gezogen wird, wobei die Flock-Transferfolie das Rakelmesser passiert, d. h. unter diesem hindurchgeführt bzw. -gezogen wird. Dabei nimmt die Flock-Transferfolie aufgrund von Adhäsionskräften eine vorgebbare Menge der erfindungsgemäßen Zusammensetzung auf. Die von der Flock-Transferfolie aufzunehmende Menge der erfindungsgemäßen Zusammensetzung hängt beispielsweise ab von der Viskosität der erfindungsgemäßen Zusammensetzung, von der Geschwindigkeit, mit welcher die Flock-Transferfolie das Rakelmesser passiert, sowie vom Abstand zwischen der Streichunterlage und dem Rakelmesser. Bevorzugt liegt der Abstand zwischen der Streichunterlage und dem Rakelmesser im Bereich zwischen 0,10 und 0,60 mm, besonders bevorzugt zwischen 0,20 und 0,40 mm, ganz besonders bevorzugt beträgt der Abstand 0,30 mm.

Der Transport der Flock-Transferfolie erfolgt vorzugsweise unter Verwendung eines Marschmotors, welcher auch einem Kaschierwerk zugeordnet sein kann.

An den Beschichtungsvorgang schließt sich ein Trocknen (Schritt f) der beschichteten Flock-Transferfolie an. Dazu ist eine Trocknungsvorrichtung vorgesehen, wobei als Trocknungsmittel beispielsweise Infrarot-Wärmestrahler eingesetzt werden. Je nachdem, welcher Trocknungsgrad angestrebt wird, können Art, Anzahl, Anordnung und elektrische Leistung der Trocknungsmittel sowie die Geschwindigkeit, mit welcher die beschichtete Flock-Transferfolie die Trocknungsvorrichtung passiert und die Länge der Trocknungsvorrichtung variiert werden.

Gemäß einem weiteren Schritt g) wird die Flock-Transferfolie vorzugsweise zu einem Kaschierwerk transportiert. Das Kaschierwerk weist zumindest zwei Quetschwalzen auf, zwischen denen die Flock-Transferfolie hindurchgeführt wird. Beim Trocknen möglicherweise aufgetretene Verspannungen können so ausgeglichen werden. Dabei beträgt der Quetschdruck bevorzugt zwischen 1,0 bar und 3,0 bar, besonders bevorzugt zwischen 1,5 bar und 2,5 bar und ganz besonders bevorzugt 1,8 bar. Zudem ist es günstig, wenn die Walzen beheizbar sind, wobei Temperaturen zwischen 80 °C und 140 °C bevorzugt sind. Besonders bevorzugt sind Temperaturen im Bereich zwischen 100 °C und 120 °C. Ganz besonders bevorzugt beträgt die Temperatur 110 °C. Besonders vorteilhaft ist es, wenn eine der Walzen als weiche Walze aus einem weichen Material, z. B. ein Silikon, und die andere Walze als harte Walze aus einem harten Material, z. B. einem Stahl, ausgebildet ist. Als Antriebswalze wird bevorzugt die harte Walze, wie beispielsweise eine Stahlwalze, eingesetzt. Diese synchronisiert den Lauf der anderen, aus einem vergleichsweise weicheren Material gefertigten Walze, z. B. einer Silikonwalze, mittels Schlepprädern. Der Antrieb kann unter Verwendung eines elektronisch geregelten Getriebemotors erfolgen, welcher beispielsweise durch eine Kette mit der Antriebswalze verbunden ist.

Die Flock Transferfolie weist dabei vorzugsweise eine Trägerschicht auf, durch die die Flockschicht zum einen mechanisch stabilisiert wird und zum anderen während der Lagerung und des Transportes beispielsweise vor Licht und Schmutz geschützt wird. Besonders vorteilhaft ist es, wenn die Trägerschicht ein Papier oder Gewebe aufweist, das silikonbeschichtet ist. Das silikonisierte Papier kann dabei gebleicht oder ungebleicht sein. Sowohl das Papier als auch das Gewebe können ein- oder beidseitig beschichtet sein, wobei die beschichtete Seite sich durch eine nicht haftende Oberfläche auszeichnet. Durch das silikonisierte Papier oder Gewebe wird zuverlässig ein Aneinanderhaften der Bahnen der beschichteten Flock-Transferfolie bzw. ein Verkleben gegeneinander oder gegen andere Materialien verhindert. Zudem lässt sich das silikonisierte Papier oder Gewebe durch Abziehen von der Flockschicht der Flock-Transferfolie einfach und rückstandslos wieder entfernen.

In einer vorteilhaften Ausführungsform des erfindungsgemäßen Verfahrens ist vorgesehen, dass sich an den Schritt g) ein Schritt h) anschließt, in dem die fertig gestellte Flock-Transferfolie beispielsweise nach Durchlaufen eines Bandspeichers aufgewickelt wird. Die entsprechend bewickelten Rollen können dann der gewünschten Verwendung zugeführt werden, beispielsweise einem Druckwerk oder Ähnlichem.

Für die Bedruckung der Flock-Transferfolie kann beispielsweise ein Tintenstrahldrucker vorgesehen sein, mit welchem die Flock-Transferfolie farb- und waschecht bedruckt wird. Besonders vorteilhaft ist es, wenn ein Hybridplotter zum Einsatz kommt, der eine Kombination von Drucker und Plotter darstellt. Dabei wird in einem ersten Schritt das vorgegebene Motiv auf die Flock-Transferfolie gedruckt. In einem zweiten Schritt wird die motivgemäße Konturlinie in eine Schneidlinie umgewandelt, entlang derer dann in einem dritten Schritt das Motiv ausgeschnitten wird. Anschließend wird die Matrix, d. h. alles, was nicht zum Motiv gehört, entfernt. Das so erhaltene Flock-Transfer-Motiv kann mittels Hitze und Druck auf ein Textil aufgebracht werden. Besonders vorteilhaft an einem Hybridplotter ist, dass damit kostengünstige Mehrfarbdrucke durchgeführt werden können, weil keine Sieb- und Filmkosten entstehen. Zudem zeichnet sich ein Hybridplotter durch eine hohe Robustheit, geringe Reparatur- und Wartungsanfälligkeit und damit hohe Langlebigkeit aus.

Weiterhin wird die Aufgabe durch eine Flock-Transferfolie erhältlich nach einem Verfahren gemäß einer der vorhergehenden Ausführungsformen gelöst.

Die erfindungsgemäße beschichtete Flock-Transferfolie lässt sich beispielsweise mit einem Tintenstrahldrucker, bevorzugt unter Verwendung eines Hybridplotters, waschecht bedrucken und motivgerecht schneiden. Aufgrund der Beschichtung mit der erfindungsgemäßen Zusammensetzung wird nicht nur eine hohe Waschbarkeit, sondern auch eine hohe Konturenschärfe des produzierten ein- oder mehrfarbigen Flock-Transfer-Motivs erzielt. Der Druckprozess ist besonders ressourcenschonend und damit kosteneffizient, zumal ein Verlaufen bzw. Ausfließen der aufgespritzten Tinte verhindert wird und somit eine hohe Farbausbeute erzielt wird. Dabei löst die lösungsmittel- oder wasserbasierte Tinte die Beschichtung der Flock-Transferfolie, welche die erfindungsgemäße Zusammensetzung aufweist, an und kann somit leicht in die Beschichtung eindringen. Darüber hinaus wird die Vernetzung der in der Tinte enthaltenen Farbstoffe bzw. Pigmente mit den Textilfasern der Flockschicht verbessert. Zudem wird die Oxidation der in der Tinte enthaltenen Farbstoffe bzw. Pigmente gefördert, während die Zerstörung der Farbstoffe bzw. Pigmente durch reduktive Einflüsse verhindert wird. Weiterhin fungiert die Beschichtung aus der erfindungsgemäßen Zusammensetzung als Fixierhilfe, wobei eine hohe Farbtiefe erhalten wird. Die Farbtiefe sowie der samtartige Griff der Flocks bleiben auch nach einem Aufbringen des Flock-Transfer-Motivs auf ein Textil erhalten, wobei Druck und Hitze angewendet werden. Dies ist unter anderem darauf zurückzuführen, dass durch die Beschichtung Wärme und Druck von der Flockschicht zumindest teilweise abgehalten werden. Neben dieser Schutzfunktion hat die Beschichtung auch eine stabilisierende Wirkung für die Flock-Transferfolie.

Insgesamt können durch das Bedrucken und anschließende Zuschneiden einer erfindungsgemäßen Flock-Transferfolie Flock-Transfer-Motive erhalten werden, die eine hohe Waschbarkeit aufweisen und damit höchsten Echtheitsansprüchen genügen. Besonders vorteilhaft ist, dass sich unter Verwendung einer erfindungsgemäßen Flock-Transferfolie auch kleinste Auflagen an ein- oder mehrfarbigen, fotorealistischen Flock-Transfer-Motiven einfach und kostengünstig herstellen lassen.

Außerdem wird die Aufgabe gelöst durch eine Flock-Transferfolie umfassend eine Flockschicht, wobei die Flockschicht auf einer ersten Seite einen Schmelzklebstoff aufweist, über den die Flockschicht lösbar mit einer Trägerschicht verbunden ist, wobei eine von der Trägerschicht abgewandte zweite Seite der Flockschicht eine Beschichtung aufweist, die einen Dispersionskleber, einen Verdicker und ein Fixieradditiv aufweist.

Eine solche erfindungsgemäße Folie besitzt sämtliche der weiter oben bereits beschriebenen Vorteile. Insbesondere kann eine Bedruckung dann direkt auf der Beschichtung und dem Flock erfolgen, ohne das vorher eine Schutzfolie oder ähnliches entfernt werden muss. Die Beschichtung ist vielmehr unbedeckt. Der Schmelzklebstoff ist vorteilhafterweise flächig aufgetragen und weist insbesondere eine weiße Färbung auf. Dadurch kann er gleichzeitig dafür sorgen, dass die aufgedruckten Farben unabhängig von der Farbe des verwendeten Textils farbecht sind.

In einer besonders vorteilhaften Ausführungsform der erfindungsgemäßen Flock-Transferfolie ist vorgesehen, dass der Dispersionskleber und/oder der Verdicker unabhängig voneinander ein Polymer eines Acrylderivates enthalten, und dass das Fixieradditiv ein Aminoplast enthält. Für den Fall, dass die Flockschicht eine Beschichtung enthält, welche die vorgenannten Komponenten aufweist, wird ein besonders hohes Echtheitsniveau erreicht. Dies lässt sich unter anderem darauf zurückführen, dass eine intensive Vernetzung der auf die Flockschicht aufgespritzten Tinten mit den Textilfasern der Flockschicht stattfindet. Auch an sich schlecht färbbare Flockmaterialien lassen sich so farbintensiv und -echt bedrucken.

Die Aufgabe wird außerdem gelöst durch eine Flock-Transferfolie umfassend eine Flockschicht, wobei die Flockschicht auf einer ersten Seite einen Schmelzklebstoff aufweist, über den die Flockschicht lösbar mit einer Trägerschicht verbunden ist, wobei eine von der Trägerschicht abgewandte zweite Seite der Flockschicht eine Beschichtung aufweist, wobei die Beschichtung eine Zusammensetzung gemäß einem der vorgenannten Ausführungsbeispiele aufweist.

Zusätzlich zu den bereits genannten Vorteilen der erfindungsgemäßen Flock-Transferfolie ist es besonders vorteilhaft, dass die Eigenschaften der Zusammensetzung, welche für die Beschichtung der Flock-Transferfolie verwendet wird, nach Bedarf eingestellt werden können, indem der Dispersionskleber, der Verdicker und das Fixieradditiv anwendungsspezifisch ausgewählt und miteinander kombiniert werden. Ergänzend kann vorgesehen sein, dass die Zusammensetzung ein organisches Lösungsmittel und/oder Wasser enthält. Durch die Wahl des Lösungsmittels oder einer Lösungsmittel-Kombination sowie des Lösungsmittelvolumens können beispielsweise die Viskosität und damit die Fließeigenschaften der Zusammensetzung individuell angepasst werden. Mithin kann die auf die Flock-Transferfolie als obere Abschlussschicht aufzubringende Beschichtung bzw. Zusammensetzung als eine Paste, eine Dispersion oder eine Lösung vorliegen.

In einer Ausführungsform der erfindungsgemäßen Flock-Transferfolie ist vorgesehen, dass die Trägerschicht ein silikonisiertes Gewebe oder ein silikonisiertes Papier aufweist. Das silikonisierte Papier kann gebleicht oder ungebleicht sein. Das Papier bzw. Gewebe kann einoder beidseitig beschichtet sein. Das Vorhandensein einer derartigen Trägerschicht ist besonders vorteilhaft, weil die Trägerschicht der Flockschicht eine ausreichende Formstabilität gibt und diesen gleichzeitig vor Verunreinigungen schützt. Durch die Silikonisierung kann die Trägerschicht dann einfach und schnell von der Flockschicht, z. B. durch Abziehen, entfernt werden. Nach dem Entfernen der Trägerschicht ist sowohl die samtartige Haptik als auch die samtartige Optik der Flockschicht unverändert. Bei einer beidseitigen Silikonisierung der Trägerschicht wird auch ein aneinanderhaften benachbarter Bahnen der aufgewickelten Flock-Transferfolie zuverlässig verhindert.

Eine weitere Ausgestaltung der erfindungsgemäßen Flock-Transferfolie sieht vor, dass der Schmelzklebstoff ein Polyurethan enthält. Das Aufbringen eines Flock-Transfer-Motivs auf ein Textil erfolgt unter Anwendung von Hitze und Druck. Dabei dient der Schmelzklebstoff dazu, zwischen dem Flock-Transfer-Motiv und dem Textil eine feste Verbindung herzustellen. Schmelzklebstoffe auf Polyurethanbasis lassen sich gut bei moderaten Temperaturen verarbeiten, härten vergleichsweise schnell aus und sind toxikologisch unbedenklich. Insbesondere letzterer Aspekt ist bezüglich der Anwendung im Textilbereich von Bedeutung.

In einer wichtigen Ausführungsform der erfindungsgemäßen Flock-Transferfolie ist eine Schmelzklebstoff-Schicht vorgesehen, wobei eine von der Flockschicht abgewandte Fläche der Schmelzklebstoff-Schicht lösbar mit der Trägerschicht verbunden ist. Die Schmelzklebstoff weist dabei insbesondere eine weiße Färbung auf uns sorgt so unabhängig von einem verwendeten Stoff für Farbechtheit des aufgedruckten Motivs.

In einem bevorzugten Ausführungsbeispiel der erfindungsgemäßen Flock-Transferfolie ist vorgesehen, dass die Flockschicht Textilfasern aufweist, insbesondere Kunstseidefasern. Dabei können die Kunstseidefasern beispielsweise Viskose und/oder Polyamid aufweisen. Alternativ oder ergänzend können die Textilfasern auch Polyester und/oder Baumwolle aufweisen.

Eine vorteilhafte Ausgestaltung der erfindungsgemäßen Flock-Transferfolie sieht vor, dass die Textilfasern geschnitten und/oder gemahlen vorliegen. Dadurch sind die Textilfasern in der Regel elektrisch leitfähig und rieselfähig, wobei die Rieselfähigkeit die Herstellung einer Flockschicht deutlich erleichtert. Die geschnittenen Textilfasern richten sich üblicherweise parallel zueinander aus, wodurch sich eine samtartige Optik und Haptik ergibt. Dies wird bei gemahlenen Fasern in der Regel ohne weitere Ordnung der Textilfasern erreicht. Die Textilfasern weisen bevorzugt eine Länge im Bereich zwischen 0,1 und 3,0 mm auf, besonders bevorzugt zwischen 0,2 und 2,0 mm und ganz besonders zwischen 0,3 mm und 1,0 mm. Die Stärke bzw. Dicke der Textilfasern liegt bevorzugt im Bereich zwischen 0,9 und 22,0 dtex, besonders bevorzugt zwischen 1,1 und 6,6 dtex. Ganz besonders bevorzugt beträgt die Stärke der Textilfasern zwischen 1,2 und 1,7 dtex. Die Einheit Tex (Einheitenzeichen tex) gibt die Feinheit eines linienförmigen textilen Gebildes an. Dabei gilt: 1 tex = 1 Gramm pro 1000 Meter.

Vorteilhaft ist, dass die erfindungsgemäße Flock-Transferfolie waschecht bedruckbar, schneidbar und heißsiegelfähig ist. Dabei können auch kleine Auflagen eines gewünschten Flock-Transfer-Motivs einfach und kostengünstig hergestellt werden. Besonders günstig ist, dass die erfindungsgemäße Flock-Transferfolie mit wasserbasierter Tinte und/oder mit lösungsmittelbasierter Tinte bedruckbar ist.

Die erfindungsgemäße Flock-Transferfolie wird besonders vorteilhaft zum Bedrucken mit einem Tintenstahldrucker verwendet, insbesondere mit einem Hybridplotter. Letzterer ist eine Kombination von Drucker und Plotter. In einem ersten Schritt wird das vorgegebene Motiv auf die Flock-Transferfolie gedruckt. In einem zweiten Schritt wird die motivgemäße Konturlinie in eine Schneidlinie umgewandelt, entlang derer dann in einem dritten Schritt das Motiv ausgeschnitten wird. Anschließend wird die Matrix, d. h. alles, was nicht zum Motiv gehört, entfernt. Weil keine Sieb- und Filmkosten entstehen, können mit einem Hybridplotter kostengünstige Mehrfarbdrucke durchgeführt werden. Außerdem ist ein Hybridplotter äußerst robust, wenig reparatur- und wartungsanfällig und somit langlebig.

Vorzugsweise wird die erfindungsgemäße Flock-Transferfolie zur Herstellung eines Textilproduktes verwendet, welches ein Flock-Transfer-Motiv aufweist. Dazu wird das bedruckte und zurechtgeschnittene Flock-Transfer-Motiv unter Anwendung von Hitze und Druck auf ein Textil aufgebracht und mittels eines auf seiner Unterseite vorgesehenen Schmelzklebstoffs fixiert. Der z. B. Polyurethan basierte Schmelzklebstoff dient dazu, zwischen dem Flock-Transfer-Motiv und dem Textil eine feste Verbindung herzustellen. Der Schmelzklebstoff kann schichtig vorliegen und/oder zumindest zum Teil punktuell aufgebracht sein. Dabei ist mit der Unterseite diejenige die Seite der Flock-Transferfolie gemeint, auf welcher sich nicht die Beschichtung aus der erfindungsgemäßen Zusammensetzung befindet.

Mit der vorliegenden Erfindung wird eine Zusammensetzung zum Beschichten einer Flock-Transferfolie bereitgestellt, welche für die Produktion bedruckter vollwaschbarer Flock-Transfer-Motive geeignet ist. Die erfindungsgemäße Flock-Transferfolie zeichnet sich insbesondere dadurch aus, dass sie kosteneffizient bedruckbar sowie schneidbar und heißsiegelfähig ist, wobei Druckergebnisse bzw. Flock-Transfer-Motive mit hoher Farbtiefe, Konturenschärfe und guten Farbausbeuten erhalten werden, insbesondere wenn das Bedrucken mit einem Tintenstrahldrucker oder Hybridplotter erfolgt. Vollwaschbare und damit dauerhaft farbechte Flock-Transfer-Motive lassen sich einfach und kostengünstig herstellen und für die Produktion hochwertiger Textilprodukte verwenden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Es zeigt:
- Fig. 1: eine schematische Ansicht einer Vorrichtung zum Herstellen einer Flock-Transferfolie und
- Fig. 2: eine schematische Darstellung einer erfindungsgemäßen Flock-Transferfolie im Querschnitt.

Für die nachfolgend angeführten konkreten Ausführungsbeispiele werden folgende Bestandteile verwendet:

| | |
|---|---|
| A) TUBVINYL^{®} 235 S: | Acrylpolymer in wässriger Dispersion, |
| B) TUBICOAT Verdicker Pra: | Modifiziertes Polyacrylamid in Wasser/aliphatischen Kohlenwasserstoffen, |
| C) TUBASSIST FIX 102 W: | Formaldehyd-Melamin-Harz |
| D) Lösungsmittel: | Wasser, ein aliphatischer oder alicyclischer Kohlenwasserstoff mit 1 bis 20 Kohlenstoffatomen, bevorzugt mit 9 bis 16 Kohlenstoffatomen, oder ein Gemisch der vorgenannten Lösungsmittel. |

### Allgemeine Arbeitsvorschrift zur Herstellung einer erfindungsgemäßen Zusammensetzung

TUBVINYL^{®} 235 S und das Lösungsmittel, d. h. Wasser oder ein aliphatischer oder ein alicyclischer Kohlenwasserstoff oder ein Gemisch einer Auswahl der vorgenannten Lösungsmittel, werden unter Rühren bei Raumtemperatur gemischt, wobei die Rührphase ca. 20 min. beträgt. Zu dieser Suspension wird TUBASSIST FIX 102 W hinzugefügt und es wird weitere 20 min. lang bei Raumtemperatur gerührt. Dann wird TUBICOAT Verdicker Pra hinzugegeben und für weitere 20 min bei Raumtemperatur gerührt.

Nach einer 12-stündigen Ruhephase kann die Zusammensetzung zum Beschichten einer Flock-Transferfolie eingesetzt werden.

### Ausführungsbeispiel 1:

Aus 7,00 kg TUBVINYL^{®} 235 S, 250 mL TUBICOAT Verdicker Pra, 1,50 kg TUBASSIST FIX 102 W und 25,00 L Wasser wird - wie in der allgemeinen Arbeitsvorschrift beschrieben - eine Zusammensetzung zum Beschichten einer Flock-Transferfolie hergestellt.

### Verfahren zum Beschichten einer Flock-Transferfolie

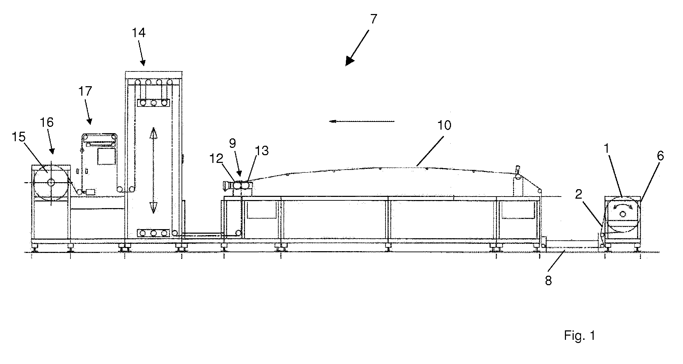

Das erfindungsgemäße Verfahren wird in folgendem unter Bezugnahme auf die Figuren, insbesondere Fig. 1, beschrieben. Das Verfahren sieht in einem ersten Schritt a) vor, dass eine Rolle 1, auf der eine Flock-Transferfolie2 umfassend eine Trägerschicht 3 und eine Flockschicht 4 mit einer dazwischen befindlichen Schicht aus einem Schmelzklebstoff 5, in eine Abwickelvorrichtung 6 der Vorrichtung 7 eingehängt wird. In der Regel hat eine solche Rolle 1 eine Rohbreite, d. h. ein Endmaß nach dem Zuschnitt, von 52,0 cm und eine Länge von 360 m. Im nächsten Schritt b) erfolgt die Fixierung der Rolle 1 in der Abwickelvorrichtung 6, beispielsweise mittels einer pneumatischen Spannwalze 8. Dann wird die zu beschichtende Flock-Transferfolie 2 "eingefädelt" und danach deren Spannung beispielsweise durch eine pneumatische Scheibenbremse reguliert.

Durch Betätigen der Abwickelvorrichtung 6 (Schritt c) wird die Flock-Transferfolie 2 nach und nach von der Rolle 1 abgewickelt und dann in eine Beschichtungsvorrichtung 8 eingebracht (Schritt d). Die Beschichtungsvorrichtung weist insbesondere eine Streichunterlage, ein Rakelmesser und einen Vorratsbehälter auf, wobei der Vorratsbehälter eine erfindungsgemäße Zusammensetzung enthält. Zur Überwachung des Volumens der in dem Vorratsbehälter enthaltenen Zusammensetzung weist der Vorratsbehälter einen Sensor für die Niveau-Überwachung auf, z. B. einen oder mehrere Ultraschallsensoren. Das Befüllen des Vorratsbehälters bzw. das Nachfüllen der erfindungsgemäßen Zusammensetzung erfolgt z.B. mittels einer Peristaltik-Schlauchpumpe.

Zum Beschichten der Flock-Transferfolie 2 mit der erfindungsgemäßen Zusammensetzung wird die Flock-Transferfolie gemäß Schritt e) durch die Beschichtungsvorrichtung 8 hindurchgeführt bzw. -gezogen, wobei die Flock-Transferfolie 2 das Rakelmesser passiert, d. h. unter diesem hindurchgeführt bzw. -gezogen wird. Dabei nimmt die Flock-Transferfolie 2 durch Adhäsionskräfte eine vordefinierte Menge der erfindungsgemäßen Zusammensetzung auf. Die auf die Flock-Transferfolie aufgebrachte Menge der erfindungsgemäßen Zusammensetzung hängt unter anderem ab von der Viskosität der erfindungsgemäßen Zusammensetzung, der Geschwindigkeit, mit welcher die Flock-Transferfolie 2 das Rakelmesser passiert, vom Abstand zwischen der Streichunterlage und dem Rakelmesser. Letzterer liegt bevorzugt im Bereich zwischen 0,10 und 0,60 mm, besonders bevorzugt zwischen 0,20 und 0,40 mm. Ganz besonders bevorzugt beträgt der vorgenannte Abstand 0,30 mm.

Der Transport der Flock-Transferfolie 2 erfolgt unter Verwendung eines Marschmotors, welcher auch einem Kaschierwerk 9 zugeordnet ist.

Es schließt sich ein Trocknen (Schritt f) der beschichteten Flock-Transferfolie 2 an. Dazu ist eine Trocknungsvorrichtung 10 vorgesehen, z. B. mit Infrarot-Wärmestrahlern als Trocknungsmittel. Je nach gewünschtem Trocknungsgrad können Art, Anzahl, Anordnung und elektrische Leistung der Trocknungsmittel sowie die Geschwindigkeit, mit welcher die beschichtete Flock-Transferfolie 2 die Trocknungsvorrichtung 10 passiert, individuell gewählt werden. Werden z. B. neun Infrarot-Wärmestrahler mit einer elektrischen Leistung von jeweils 2 kW verwendet, wird beispielsweise die Flock-Transferfolie mit einer Geschwindigkeit von ca. 2 m/min. durch die Trocknungsvorrichtung geführt.

In einem weiteren Schritt g) kann die Flock-Transferfolie 2 zu einem Kaschierwerk 9 transportiert. Dabei wird die Flock-Transferfolie 2 zwischen zwei Quetschwalzen 12, 13 hindurchgeführt, wodurch sie auf Spannung gebracht bzw. gehalten werden. Der Quetschdruck beträgt bevorzugt zwischen 1,0 und 3,0 bar, besonders bevorzugt zwischen 1,5 und 2,5 bar und ganz besonders bevorzugt 1,8 bar. Die Walzen 12, 13 können beheizbar sein, wobei Temperaturen zwischen 80 und 140 °C bevorzugt sind. Besonders bevorzugt sind Temperaturen im Bereich zwischen 100 und 120 °C. Ganz besonders bevorzugt beträgt die Temperatur 110 °C. Besonders vorteilhaft ist es, wenn eine der Walzen 12, 13 aus einem weichen Material, z. B. einem Silikon, und die andere aus einem harten Material, z. B. einem Stahl, gefertigt ist. Die als Antriebswalze dienende Quetschwalze 13 ist z. B. aus Stahl gefertigt und synchronisiert den Lauf der anderen, aus einem vergleichsweise weicheren Material gefertigten Walze 12, z. B. einer Silikonwalze, mittels Schlepprädern. Für den Antrieb wird ein elektronisch geregelter Getriebemotor eingesetzt, der z. B. durch eine Kette mit der Antriebswalze 13 verbunden ist.

Im Ergebnis wird ein Kaschierverbund umfassend die Flock-Transferfolie bestehend aus der Trägerschicht, die ein Papier oder ein Gewebe aufweist, der Schicht aus einem Schmelzklebstoff, der darauf befindlichen Flockschicht mit der darauf aufgetragenen Beschichtung aus der erfindungsgemäßen Zusammensetzung hergestellt. Durch die Trägerschicht wird die Flock-Transferfolie während der Lagerung und des Transportes beispielsweise vor Licht und Schmutz geschützt. Besonders vorteilhaft ist es, wenn das Papier oder Gewebe der Trägerschicht silikonbeschichtet ist, wobei das silikonisierte Papier gebleicht oder ungebleicht sein kann. Das Papier bzw. das Gewebe kann ein- oder beidseitig beschichtet sein. Durch das silikonisierte Papier oder Gewebe wird einfach und zuverlässig ein Aneinanderhaften der Bahnen der beschichteten Flock-Transferfolie bzw. ein Verkleben gegeneinander oder gegen andere Materialien verhindert. Das Papier bzw. Gewebe lässt sich einfach und schnell durch Abziehen von der Flockschicht rückstandslos entfernen.

An den Schritt g) kann sich ein weiterer Schritt h) anschließen, in dem die Flock-Transferfolie 2 zunächst durch einen Bandspeicher 14 geführt und anschließend auf eine neue Rolle 15 aufgewickelt wird. Dafür ist eine unabhängige motorgetriebene Aufwickeleinheit 16 vorgesehen, welcher eine automatische Kantenführung 17 vorgeschaltet ist.

Die so hergestellte Flock-Transferfolie kann farb- und waschecht bedruckt werden, z. B. unter Verwendung eines Tintenstrahldruckers. Besonders vorteilhaft ist der Einsatz eines Hybridplotters, d. h. einer Kombination von Drucker und Plotter. Dabei wird zunächst das vorgegebene Motiv auf die Flock-Transferfolie gedruckt. Dann wird die motivgemäße Konturlinie in eine Schneidlinie umgewandelt, entlang derer das Motiv ausgeschnitten wird. Danach wird die Matrix entfernt, d. h. alles, was nicht zum Motiv gehört. Das so erhaltene Flock-Transfer-Motiv kann mittels Hitze und Druck auf ein Textil aufgebracht werden. Mit einem Hybridplotter können kostengünstige Mehrfarbdrucke durchgeführt werden können, zumal keine Sieb- und Filmkosten entstehen. Zudem sind Hybridplotter robust, wenig reparatur- und wartungsanfällig und mithin langlebig.

Während eines Rollenwechsels kann der Bandspeicher 14 die kontinuierlich weiterbeförderte, beschichtete Flock-Transferfolie 2 aufnehmen. Dadurch wird über die gesamte Länge der ursprünglich eingehängten Rolle (360 m) ein gleichmäßiges Beschichten mit der erfindungsgemäßen Zusammensetzung gewährleistet.

Die beschichtete Flock-Transferfolie sollte möglichst in einer kühlen, dunklen und mäßig trockenen Umgebung gelagert werden.

### Flock-Transferfolie

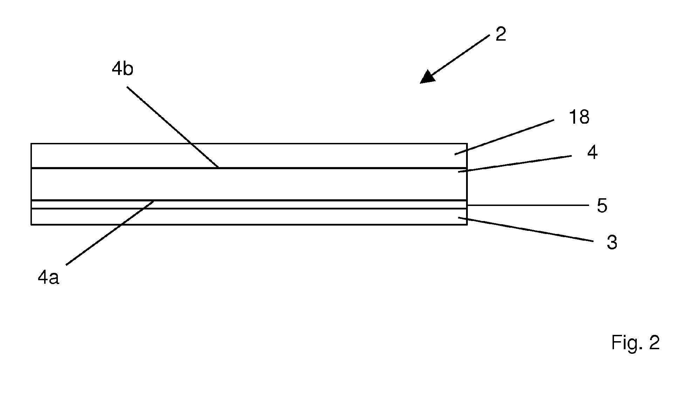

In Fig. 2 ist eine schematische Darstellung einer erfindungsgemäßen Flock-Transferfolie 2 im Querschnitt gezeigt. Die Flock-Transferfolie 2 umfasst eine Flockschicht 4, welche auf einer ersten Seite 4a einen Schmelzklebstoff 5 aufweist. Durch den Schmelzklebstoff 5 ist die Flockschicht 2 lösbar mit einer Trägerschicht 3 verbunden. Letztere weist insbesondere beidseitig eine nichtdargestellte Beschichtung auf.

Auf einer von der Trägerschicht 3 abgewandten zweiten Seite 4b ist die Flockschicht mit einer Beschichtung 18 versehen, die eine Zusammensetzung mit einem Dispersionskleber, einem Verdicker, und einem Fixieradditiv aufweist.

Die Flockschicht 4 weist Textilfasern auf, insbesondere Kunstseidefasern wie beispielsweise Viskose und Polyamid. Die Flockschicht 4 kann Textilfasern aus nur einem Fasermaterial aufweisen und/oder Textilfasern aus einem Materialgemisch. Neben Viskose und Polyamid kommen z. B. Polyester und Baumwolle als Fasermaterialien in Frage. Die Textilfasern liegen in der Regel geschnitten und/oder gemahlen vor. Dadurch sind sie üblicherweise elektrisch leitfähig und rieselfähig, wobei die Rieselfähigkeit die Herstellung der Flockschicht 4 erheblich erleichtert. Die geschnittenen Textilfasern richten sich normalerweise parallel aus, bei den gemahlenen Textilfasern ist keine besondere Ausrichtung erforderlich. Unabhängig von der Faserform wird eine samtartige Optik und Haptik erreicht. Die Textilfasern sind bevorzugt zwischen 0,1 und 3,0 mm lang, besonders bevorzugt zwischen 0,2 und 2,0 mm und ganz besonders zwischen 0,3 mm und 1,0 mm. Die Stärke bzw. Dicke der Textilfasern liegt bevorzugt im Bereich zwischen 0,9 und 22,0 dtex, besonders bevorzugt zwischen 1,1 und 6,6 dtex. Ganz besonders bevorzugt beträgt die Stärke der Textilfasern zwischen 1,2 und 1,7 dtex. Die Einheit Tex (Einheitenzeichen tex) ist eine Angabe für die Feinheit eines linienförmigen textilen Gebildes. Es gilt: 1 tex = 1 Gramm pro 1000 Meter. In einer besonders bevorzugten Ausführungsform weisen die Textilfasern der Flockschicht 4 eine Länge von 0,3 mm und eine Stärke von 1,2 dtex auf.

Der auf der ersten Seite 4a der Flockschicht 4 vorgesehene Schmelzklebstoff 5 enthält beispielsweise ein Polyurethan. Der Schmelzklebstoff 5 dient dazu, beim Aufbringen eines bedruckten Flock-Transfer-Motivs auf ein Textil, was unter Anwendung von Hitze und Druck erfolgt, zwischen dem Flock-Transfer-Motiv und dem Textil eine feste Verbindung herzustellen. Dafür sind Schmelzklebstoffe 5 auf Polyurethanbasis besonders geeignet, weil sie sich bei moderaten Temperaturen gut verarbeiten lassen, vergleichsweise schnell aushärten und toxikologisch unbedenklich sind. Insbesondere Letzteres ist hinsichtlich der Anwendung im Textilbereich von Bedeutung. Ferner dient der Schmelzklebstoff als insbesondere weiße Grundierung.

Der Schmelzklebstoff 5 kann insbesondere flächig, gegebenenfalls aber auch punktuell an der ersten Seite 4a der Flockschicht 4 aufgebracht sein. Dies hängt beispielsweise von der Größe und Form des auf einem Textil zu fixierenden Flock-Transfer-Motivs ab und von dem Material des Textils. Für die Lagerung und weitere Handhabung des Flock-Transfer-Motivs ist es vorteilhaft, wenn die Schmelzklebstoff-Schicht 5 lösbar mit der Trägerschicht 3 als silikonisierte Schicht, die insbesondere ein silikonisiertes Gewebe oder ein silikonisiertes Papier aufweist, verbunden ist. Das silikonisierte Papier bzw. Gewebe kann vor dem Aufbringen des Flock-Transfer-Motivs auf ein Textil einfach und schnell durch simples Abziehen von der Flockschicht 4 rückstandslos entfernt werden.

In einer bevorzugten Ausführungsform der Flock-Transferfolie 2 weist die Beschichtung 18 eine Zusammensetzung auf, welche die folgenden Komponenten enthält:
- 10 bis 30 Gew.-% eines Dispersionsklebers, welcher ein Polymer eines Acrylderivates enthält,
- 0,1 bis 12 Gew.-% eines Verdickers, welcher ein Polymer eines Acrylderivates enthält, und
- 0,5 bis 14 Gew.-% eines Fixieradditivs, welches ein Aminoplast enthält.

Dabei ist das Polymer des Dispersionsklebers bevorzugt ein Acrylharz, während als Polymer des Verdickers bevorzugt ein Polyacrylamid, besonders bevorzugt ein chemisch modifiziertes Polyacrylamid, eingesetzt wird. Das Aminoplast des Fixieradditivs ist bevorzugt ein Melaminharzderivat, ganz besonders bevorzugt ein Formaldehyd-Melamin-Harz. Dabei können auch chemisch modifizierte Formaldehyd-Melamin-Harze zum Einsatz kommen, z. B. Melamin-Phenol-Formaldehyd-Harze oder Melamin-Harnstoff-Formaldehyd-Harze.

Die Viskosität und damit die Fließfähigkeit der für die Beschichtung verwendeten Zusammensetzung kann beispielsweise durch Zugabe eines organisches Lösungsmittel und/oder von Wasser je nach Bedarf beeinflusst werden. Als organische Lösungsmittel werden insbesondere solche eingesetzt, welche ausgewählt sind aus der Gruppe der aliphatischen und alicyclischen Kohlenwasserstoffe mit 1 bis 20 Kohlenstoffatomen, bevorzugt mit 9 bis 16 Kohlenstoffatomen. Je nachdem, ob Wasser und/oder ein oder mehrere organische Lösungsmittel eingesetzt werden, liegt die auf die Flock-Transferfolie 2 aufzubringende Zusammensetzung als eine Paste, eine Dispersion oder eine Lösung vor.

Die mit der Beschichtung 18 versehene Flock-Transferfolie 2 lässt sich beispielsweise mit einem Tintenstrahldrucker, bevorzugt unter Verwendung eines Hybridplotters farb- und waschecht bedrucken und motivgerecht schneiden. Aufgrund der Beschichtung 5 wird nicht nur eine hohe Waschbarkeit, sondern auch eine hohe Konturenschärfe des ein- oder mehrfarbigen Flock-Transfer-Motivs erzielt. Der Druckprozess ist besonders ressourcen- und damit kosteneffizient durchführbar, weil ein Verlaufen bzw. Ausfließen der aufgespritzten Tinte verhindert wird und somit eine hohe Farbausbeute erzielt wird. Die Beschichtung 18 der Flock-Transferfolie 2 löst die lösungsmittel- oder wasserbasierte Tinte an, sodass die Tinte leicht in die Beschichtung 18 eindringen kann. Darüber hinaus wird die Vernetzung der in der Tinte enthaltenen Farbstoffe bzw. Pigmente mit den Textilfasern der Flockschicht 4 verbessert. Zudem wird die Oxidation der in der Tinte enthaltenen Farbstoffe bzw. Pigmente gefördert, während die Zerstörung der Farbstoffe bzw. Pigmente durch reduktive Einflüsse verhindert wird. Weiterhin fungiert die Beschichtung 18 als Fixierhilfe, sodass eine hohe Farbtiefe erhalten wird. Die Farbtiefe sowie der samtartige Griff der Flockschicht 4 bleiben auch nach einem Aufbringen des Flock-Transfer-Motivs auf ein Textil, wobei Druck und Hitze angewendet werden, erhalten. Ein Grund dafür ist, dass die Beschichtung 18 eine die Flockschicht 4 schützende Funktion ausübt. Neben dieser Schutzfunktion erhöht die Beschichtung 18 auch die Stabilität der Flock-Transferfolie 2.

Ganz besonders vorteilhaft ist, dass die Flockschicht 4 auf ihrer ersten Seite 4a lösbar mit der Trägerschicht 3 verbunden ist. Dabei kann die Trägerschicht 3 beispielsweise ein silikonisiertes Gewebe oder ein silikonisiertes Papier sein. Dies ist besonders vorteilhaft, weil die Trägerschicht 3 nach dem Aufbringen und Fixieren des Flock-Transfer-Motivs auf ein Textil einfach und schnell von der Flockschicht 2 abgezogen werden kann. Dabei bleiben sowohl die samtartige Haptik als auch die samtartige Optik der Flockschicht 4 vollständig erhalten.

Beim Bedrucken einer erfindungsgemäßen Flock-Transferfolie 2 werden Flock-Transfer-Motive mit einer hohen Waschbarkeit erhalten, die höchsten Ansprüchen hinsichtlich der Farbechtheit und -tiefe genügen. Besonders vorteilhaft ist, dass auch kleinste Auflagen an ein- oder mehrfarbigen, fotorealistischen Flock-Transfer-Motiven einfach und kostengünstig herstellbar sind. Flock-Transferfolien 2 bzw. die daraus hergestellten Flock-Transfer-Motive werden insbesondere zur Herstellung von Textilprodukten verwendet, welche ein Flock-Transfer-Motiv aufweisen. Dabei kann das Aufbringen eines Flock-Transfer-Motivs als eine Art Veredelung angesehen werden.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Rolle
- 2: Flock-Transferfolie
- 3: Trägerschicht
- 4: Flockschicht
- 4a: erste Seite der Flockschicht
- 4b: zweite Seite der Flockschicht
- 5: Schmelzklebstoff(-Schicht)
- 6: Abwickelvorrichtung
- 7: Vorrichtung
- 8: Beschichtungsvorrichtung
- 9: Kaschierwerk
- 10: Trocknungsvorrichtung

- 12: Quetschwalze
- 13: Quetschwalze
- 14: Bandspeicher
- 15: Rolle
- 16: Aufwickeleinheit
- 17: Kantenführung
- 18: Beschichtung

## Patentansprüche

1. Zusammensetzung zum Beschichten einer Flock-Transferfolie (2) aufweisend:
- 10 bis 30 Gew.-% eines Dispersionsklebers, welcher wenigstens ein Polymer eines Acrylderivates
enthält,
- 0,1 bis 12 Gew.-% eines Verdickers, welcher wenigstens ein Polymer eines Acrylderivates enthält,
und
- 0,5 bis 14 Gew.-% eines Fixieradditivs, welches wenigstens ein Aminoplast enthält.

2. Zusammensetzung nach Anspruch 1, **dadurch gekennzeichnet, dass** das Polymer des Dispersionsklebers ein Acrylharz ist und/oder das Polymer des Verdickers ein Polyacrylamid und/oder ein chemisch modifiziertes Polyacrylamid ist.

3. Zusammensetzung nach einem der Ansprüche 1 bis 4, **dadurch gekennzeichnet, dass** das Aminoplast des Fixieradditivs ein Melaminharzderivat und/oder ein Formaldehyd-Melamin-Harz ist.

4. Zusammensetzung nach einem der Ansprüche 1 bis 6, **dadurch gekennzeichnet, dass** die Zusammensetzung ein organisches Lösungsmittel und/oder Wasser enthält, wobei das organische Lösungsmittel insbesondere ausgewählt ist aus der Gruppe der aliphatischen und alicyclischen Kohlenwasserstoffe mit 1 bis 20 Kohlenstoffatomen, bevorzugt mit 9 bis 16 Kohlenstoffatomen.

5. Verfahren zum Beschichten einer Flock-Transferfolie (2) umfassend die Schritte:
a) Vorsehen einer Rolle, auf welcher die zu beschichtende Flock-Transferfolie (2) aufgewickelt ist, in einer Abwickelvorrichtung,
b) Einbringen der abgewickelten Flock-Transferfolie (2) in eine Beschichtungsvorrichtung, welche eine Streichunterlage, ein Rakelmesser und einen Vorratsbehälter aufweist, wobei der Vorratsbehälter eine Zusammensetzung nach einem der Ansprüche 1 bis 9 enthält,
c) Transportieren der Flock-Transferfolie (2) durch die Beschichtungsvorrichtung, wobei die Flock-Transferfolie (1) das Rakelmesser passiert und dabei mit der Zusammensetzung beschichtet wird,
d) Trocknen der beschichteten Flock-Transferfolie (2),

6. Flock-Transferfolie (2) erhältlich nach einem Verfahren gemäß Anspruch 5.

7. Flock-Transferfolie (2) umfassend eine Flockschicht (4),
wobei die Flockschicht (4) auf einer ersten Seite (4a) einen Schmelzklebstoff (5) aufweist,
und
wobei die Flockschicht (4) über den Schmelzklebstoff (5) lösbar mit einer Trägerschicht (3) verbunden ist,
**dadurch gekennzeichnet,**
**dass** die Flockschicht (4) auf einer von der Trägerschicht (3)abgewandten Fläche (4b) eine Beschichtung (18) aufweist, die einen Dispersionskleber, einen Verdicker, und ein Fixieradditiv enthält.

8. Flock-Transferfolie nach Anspruch 7, **dadurch gekennzeichnet,**
- **dass** der Dispersionskleber und/oder der Verdicker unabhängig voneinander ein Polymer eines Acrylderivates enthalten, und
- **dass** das Fixieradditiv ein Aminoplast enthält.

9. Flock-Transferfolie umfassend eine Flockschicht (4),
wobei die Flockschicht (4) auf einer ersten Seite (4a) einen Schmelzklebstoff (5) aufweist, und über den Schmelzklebstoff lösbar mit einer Trägerschicht (3) verbunden ist,
**dadurch gekennzeichnet,**
**dass** die Flockschicht (4) auf einer der Trägerschicht (3) abgewandten Fläche (4b) eine Beschichtung (18) aufweist,
wobei die Beschichtung (18) eine Zusammensetzung gemäß einem der Ansprüche 1 bis 4 aufweist.

10. Flock-Transferfolie (1) nach Anspruch 9, **dadurch gekennzeichnet, dass** die Trägerschicht (3) ein silikonisiertes Gewebe oder ein silikonisiertes Papier darstellt.

11. Flock-Transferfolie (1) nach einem der Ansprüche 9 oder 10, **dadurch gekennzeichnet, dass** der Schmelzklebstoff (5) ein Polyurethan enthält.

12. Flock-Transferfolie (1) nach einem der Ansprüche 22 bis 24, **dadurch gekennzeichnet, dass** die Textilfasern eine Länge von 0,3 mm und eine Stärke von 1,2 dtex aufweisen.

13. Verwendung einer Flock-Transferfolie (1) nach einem der Ansprüche 6 bis 12 zum Bedrucken mit einem Tintenstahldrucker.

14. Verwendung nach Anspruch 13 zur Herstellung eines Textilproduktes, welches ein Flock-Transfer-Motiv aufweist.

15. Vorrichtung zur Durchführung des Verfahrens zum Beschichten einer Flock-Transferfolie (2) nach einem der Ansprüche 1 bis 5 **dadurch gekennzeichnet, dass** die Vorrichtung (7) eine Abwickelvorrichtung (6), eine Beschichtungsvorrichtung (8), eine Trocknungsvorrichtung (10) und ein Kaschierwerk (9) aufweist, wobei insbesondere im Anschluss an das Kaschierwerk (9) ein Bandspeicher (14) und eine Aufwickeleinheit (16) angeordnet sind.
